# FASCICULE DE BREVET EUROPEEN

(11) **EP 1 403 174 B1**
(45) Date de publication et mention de la délivrance du brevet: **07.11.2007**
(21) Numéro de dépôt: 03292352.6
(22) Date de dépôt: 25.09.2003
(51) Int. Cl.: B62D 25/10, B62D 29/04

(54) **Pièce d'extrémité pour capot moteur d'un véhicule**
Frontteil für Motorhaube
End part for vehicle bonnet

(30) Priorité: 27.09.2002 FR 0212019
(43) Date de publication de la demande: 31.03.2004
(73) Titulaire: COMPAGNIE PLASTIC OMNIUM, 69007 Lyon (FR)
(72) Inventeur: André, Gérald, 01500 Amberieu en Bugey (FR); Banry, Pascal, 01800 Bourg Saint Christophe (FR); Cheron, Hugues, 01800 Meximieux (FR)
(74) Mandataire: Remy, Vincent Noel Paul

(56) Documents cités:
- GB-A- 1 570 272
- US-A- 3 850 474

## Description

La présente invention concerne une pièce d'extrémité pour capot moteur avant et une face avant d'un véhicule, comprenant une telle pièce d'extrémité.

Les capots moteur doivent être assez rigides car ils sont généralement manipulés sans grandes précautions. C'est pourquoi ils sont souvent réalisés en tôle, bien que l'on note l'apparition récente sur le marché de capots réalisés en thermoplastiques à haute résistance mécanique.

Cette rigidité présente au moins deux inconvénients.

D'une part, le capot rigide risque de heurter directement un piéton qui entrerait en collision frontale avec le véhicule.

D'autre part, même lors de chocs à faible vitesse, communément appelés « chocs assurance », ce type de capot rigide est facilement endommagé. Il est alors nécessaire de le remplacer, ce qui, même pour des chocs sans gravité, nécessite une immobilisation assez longue du véhicule et implique des coûts substantiels de réparation.

Ce problème est d'autant plus accentué lorsque le capot est plongeant, c'est-à-dire qu'il coiffe non seulement le dessus du compartiment moteur, mais également l'avant du véhicule jusqu'au-dessus du bouclier de pare-chocs, ce qui est fréquent notamment pour les voitures de sport.

De plus, dans ce cas, le raccord entre le capot et le bouclier n'est pas parfaitement jointif, car un jeu vertical doit être ménagé entre ces deux pièces pour permettre le claquage du capot.

Pour rendre ce jeu esthétiquement acceptable, on recourt à une astuce on décale les bords voisins du capot et du bouclier, afin qu'ils ne se trouvent pas l'un au-dessus de l'autre, tout en les laissant dans le même plan horizontal.

De la sorte, le raccord capot-bouclier est apparemment jointif lorsque le véhicule est vu de face. Par contre, vu de côté, le décalage est bien visible, mais on considère qu'il est esthétiquement plus acceptable.

La présente invention se propose de remédier aux inconvénients précités des capots connus, notamment d'un capot plongeant devant se raccorder à un bouclier de pare-chocs.

Ainsi, l'invention propose une pièce d'extrémité pour capot moteur avant d'un véhicule, réalisée en une matière plastique déformable et comprenant des moyens pour sa fixation à un capot moteur, dans le prolongement de celui-ci en direction de l'avant du véhicule.

L'invention propose également une face avant de véhicule, qui, outre un capot et un pare-chocs, comporte une telle pièce d'extrémité.

Une telle pièce d'extrémité peut supporter de petites déformations résultant de chocs à faible vitesse ou d'appuis lors de manoeuvres de stationnement, sans provoquer de dégradation du capot.

Dans sa limite d'élasticité, elle reprend sa forme initiale et aucune réparation n'est nécessaire. Au-delà, et dans la mesure où le capot lui-même est resté intact, seule la pièce d'extrémité doit être remplacée, ce qui implique une dépense bien inférieure aux frais de remplacement d'un capot moteur.

Grâce à l'invention, on peut donc réaliser un capot plongeant ne présentant pas la fragilité des capots habituels.

Suivant un mode de réalisation préféré, la pièce d'extrémité forme une partie au moins du bouclier du véhicule.

Une telle disposition est particulièrement intéressante, car il suffit de lever le capot pour avoir un accès complet non seulement au bloc moteur, mais également à la face avant technique du véhicule, ce qui facilite grandement les réparations lorsque celles-ci sont nécessaires.

Le pare-chocs peut quant à lui comporter une partie basse, dénommée spoiler, située sous le bouclier et assujettie à la structure, fixe, du véhicule, par exemple à une poutre transversale, afin, en cas de choc jambe, d'éviter que celle-ci ne subisse un débattement angulaire dommageable pour l'articulation du genou.

On peut alors prévoir un jeu de claquage qui ne nuise pas à l'esthétique de l'avant du véhicule. En effet, il suffit de reporter le jeu de claquage à la jonction entre le bouclier et le spoiler.

Cette jonction est moins exposée à la vue car elle se situe plus bas que la limite capot-bouclier et qu'elle est généralement située en retrait par rapport à l'avant du bouclier.

Il convient de noter que la partie basse du pare-chocs, lorsqu'elle existe, doit quant à elle être rigidement fixée à la structure du véhicule, afin d'être en mesure de traiter les chocs jambe.

Suivant un mode de réalisation particulier, la pièce d'extrémité comporte une prise d'air formant au moins une partie d'une calandre.

Cette calandre comporte par exemple une grille à lames horizontales. Une autre partie de la calandre est, le cas échéant, réalisée dans le spoiler. Il est alors possible de former le jeu de claquage entre deux lames horizontales de la grille d'entrée d'air.

Suivant un mode particulier de réalisation, la pièce d'extrémité comporte une armature formant les moyens pour sa fixation au capot.

Par ailleurs, la pièce d'extrémité peut intégrer au moins une partie des optiques avant du véhicule.

Ceci permet la réalisation de formes nouvelles de faces avant, alors que les optiques des véhicules connus sont généralement situés à la jonction entre le capot et le bouclier. Le remplacement d'ampoules est également facilité, puisque l'ouverture du capot donne directement accès aux optiques.

Les optiques sont par exemple supportés par l'armature précitée, ce qui accroît la rigidité de leur fixation. L'armature peut en outre comporter une poutre de chocs, afin d'absorber au moins une partie de l'énergie d'un choc subi par le véhicule.

L'invention sera mieux comprise à la lecture de la description qui va suivre, donnée uniquement à titre d'exemple et faite en référence aux dessins annexés dans lesquels :
- la figure 1 est une vue en perspective d'un véhicule automobile muni d'un capot prolongé d'une pièce d'extrémité, ainsi que d'un spoiler disposé sous la pièce d'extrémité ;
- la figure 2 est une vue avant en perspective illustrant une face avant de véhicule, où sont représentés le capot moteur, la pièce d'extrémité, le spoiler, les ailes ainsi que les optiques du véhicule ;
- la figure 3 est une vue arrière en perspective de la face avant de la figure 2, sur laquelle apparaît l'armature pour la fixation de la pièce d'extrémité au capot moteur;
- la figure 4 est une vue avant partielle en perspective de la face avant de la figure 1, illustrant la pièce d'extrémité, l'armature et les optiques ;
- la figure 5 est une vue arrière en perspective de l'ensemble représenté sur la figure 4;
- la figure 6 est une vue avant partielle en perspective illustrant l'armature représentée sur la figure 3, sur laquelle sont montés les optiques ;
- la figure 7 est une vue partielle en perspective éclatée, prise du côté de l'aile avant gauche du véhicule de la figure 1;
- la figure 8 est une vue avant en perspective éclatée illustrant la pièce d'extrémité du véhicule de la figure 1, ainsi que le spoiler disposé sous la pièce d'extrémité ; et
- la figure 9 est une vue en perspective illustrant, sous un autre angle de vue, la face avant de la figure 2, où le capot est représenté dans une position ouverte.

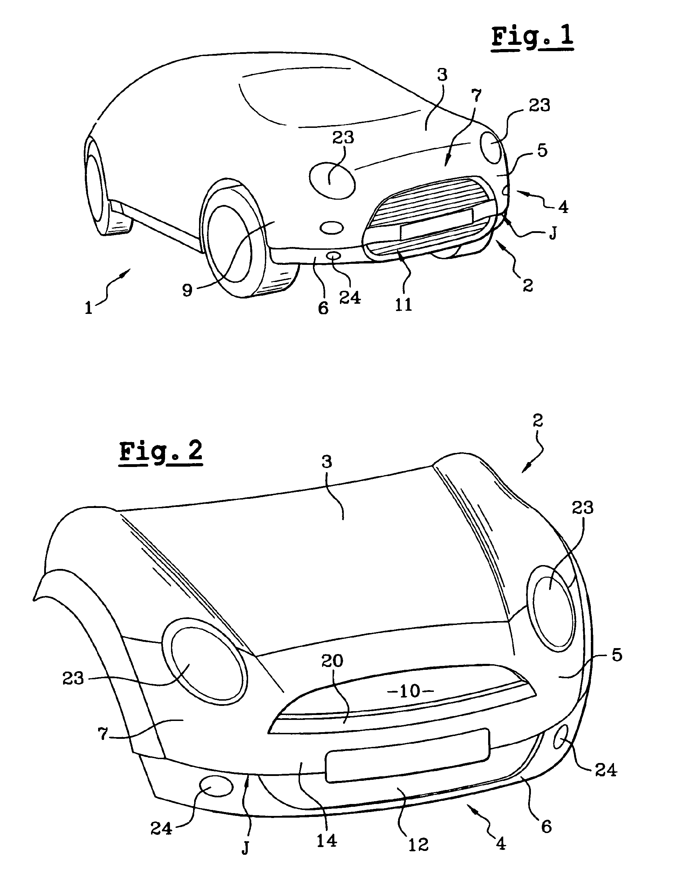

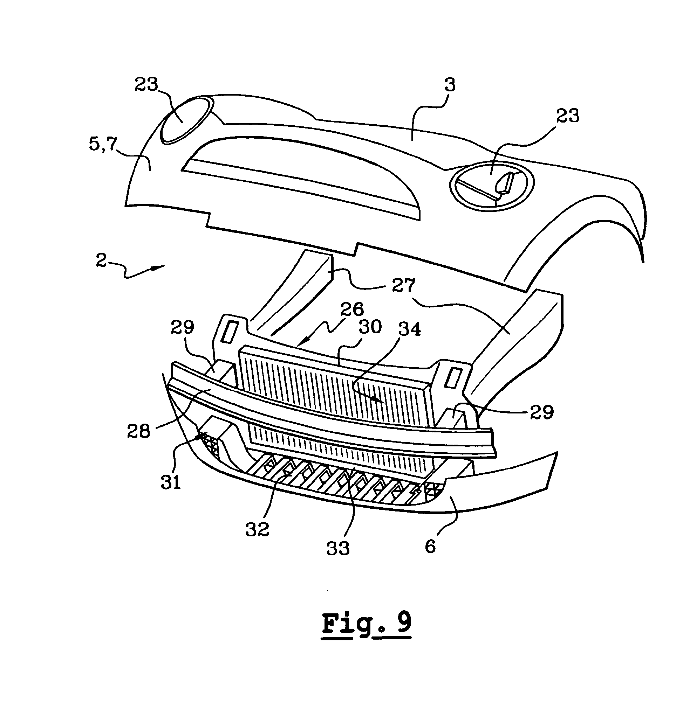

Sur la figure 1 est représenté un véhicule automobile 1 présentant une face avant 2 qui comporte un capot moteur 3 articulé entre une position fermée dans laquelle il recouvre le moteur en en interdisant l'accès (tel que représenté sur la figure 1), et une position ouverte dans laquelle il en autorise l'accès (tel que représenté sur la figure 9).

Le capot moteur 3 est une pièce rigide, car il participe de la rigidité générale du véhicule 1. Afin de présenter cette rigidité structurelle, il est de préférence réalisé en métal, généralement dans une tôle d'acier, bien que certaines matières plastiques rigides puissent convenir.

La face avant 2 comporte également un pare-chocs avant 4, destiné notamment à absorber au moins une partie de l'énergie d'un éventuel choc frontal ou latéral subi par le véhicule 1.

Le pare-chocs 4 comporte une partie supérieure 5, également dénommée bouclier, réalisée dans un thermoplastique tel qu'un polypropylène, ainsi qu'une partie inférieure 6 également dénommée spoiler qui, situé sous le bouclier 5, est montée sur la structure fixe du véhicule 1 pour, d'une part, améliorer l'aérodynamique de celui-ci à vitesse élevée et, d'autre part, compléter l'amortissement des chocs subis par un piéton, en empêchant l'apparition dans la jambe de celui-ci d'un débattement angulaire pouvant conduire à des lésions du genou. Plus précisément, la localisation du spoiler 6 est prévue pour empêcher que sous l'effet du choc l'angle formé par la jambe et le tibia ne dépasse une valeur de 15° environ. Le spoiler 6 est par exemple fixé sur une poutre transversale basse destinée à traiter de tels chocs.

Comme cela est visible notamment sur les figures 1 et 2, la face avant 2 du véhicule 1 comporte en outre une pièce d'extrémité 7 fixée au capot 3 dans le prolongement de celui-ci en direction de l'avant du véhicule 1, à l'aide de moyens de fixation 8 qui seront décrits ultérieurement.

Cette pièce d'extrémité 7 est réalisée dans une matière plastique déformable afin d'absorber, en se déformant, au moins une partie de l'énergie d'un choc subi par le véhicule 1. De fait, à faible vitesse, cette pièce 7 absorbe la totalité de l'énergie qui serait habituellement absorbée par le capot moteur.

Le capot 3 est ainsi préservé des dommages habituellement subis et il suffit de remplacer la pièce d'extrémité 7 - dans la mesure où elle est effectivement endommagée - sans qu'il soit nécessaire d'intervenir sur le capot 3.

De préférence, la pièce d'extrémité 7 forme au moins une partie du bouclier 5 du véhicule. En l'occurrence, comme cela est représenté sur les figures et notamment sur la figure 2, la pièce d'extrémité 7 forme en fait l'ensemble du bouclier 5.

Ainsi, en position fermée du capot 3, la pièce d'extrémité 7 vient recouvrir la face avant technique 26 du véhicule 1, et notamment ses organes fonctionnels tel qu'un radiateur 34, sur lequel les interventions sont fréquentes en cas de choc.

Par contre, en position ouverte du capot 3, la pièce d'extrémité 7, qui accompagne le capot 3 lors de son ouverture, laisse libre accès à la face avant technique 26 du véhicule 1, ce qui facilite la plupart des interventions que doit subir la face avant technique 26, et notamment le remplacement du radiateur 34, ce remplacement étant habituellement une opération relativement lourde nécessitant la dépose du pare-chocs.

Il n'est pas nécessaire de prévoir un jeu entre le capot 3 et la pièce d'extrémité 7 puisque ces deux pièces sont liées. Par contre, un jeu de claquage J est nécessaire entre la pièce d'extrémité 7 et le spoiler 6, afin de permettre la fermeture du capot 3 sans endommager les pièces assujetties à la structure du véhicule 1.

Comme la jonction entre le bouclier 5 et le spoiler 6 est situé relativement bas, ce jeu de claquage J est presque invisible, voire totalement soustrait à la vue, ce qui améliore l'esthétique du véhicule et accroît sa qualité perçue.

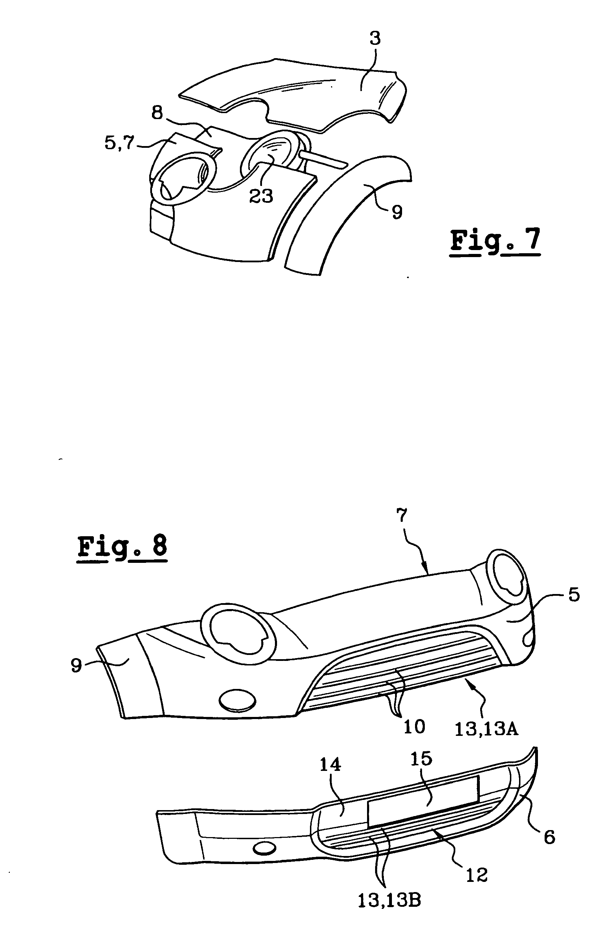

D'ailleurs, suivant un mode de réalisation illustré sur les figures 1 et 8, la pièce d'extrémité 7 forme même une partie des élargisseurs d'aile 9, ce qui accroît encore la continuité de la carrosserie.

Suivant un mode de réalisation, la pièce d'extrémité 7 comporte une prise d'air 10 destinée notamment au refroidissement du bloc moteur. Cette prise d'air 10 forme au moins une partie d'une calandre 11. Plus précisément, et tel que cela apparaît sur les figures, la calandre 11 est formée par deux prises d'air, à savoir une prise d'air supérieure 10, ménagée dans la pièce d'extrémité 7 comme nous venons de le voir, et une prise d'air inférieure 12 ménagée dans le spoiler 6.

Comme cela est visible sur les figures 1 et 8, la calandre 11 comporte une série de lamelles 13 horizontales parallèles propres à guider le flux d'air entrant sous le capot 3. Une partie 13A de ces lamelles 13 s'étend en travers de la prise d'air supérieure 10, tandis qu'une autre partie 13B s'étend en travers de la prise d'air inférieure 12. Ainsi, il est possible de mettre à profit la calandre 11 pour dissimuler le jeu de claquage J entre la lamelle inférieure de la prise d'air supérieure 10 et la lamelle supérieure de la prise d'air inférieure 12.

Suivant un mode de réalisation illustré sur les figures, les prises d'air supérieure 10 et inférieure 12 sont en fait séparées par une bande horizontale 14 destinée notamment à supporter une plaque d'immatriculation 15.

Suivant un mode de réalisation illustré sur les figures 1 et 8, cette bande 14 est formée sur le spoiler 6, tandis que suivant un mode de réalisation illustré sur la figure 2, cette bande est formée sur la pièce d'extrémité 7, ce qui permet d'accroître la rigidité de cette dernière.

Afin de contrôler le flux d'air entrant, on pourrait notamment prévoir une commande de l'orientation des lamelles 13, par exemple à l'aide d'un ou plusieurs moteurs électriques commandés manuellement ou pilotés électroniquement.

Pour en revenir aux moyens de fixation 8, ils se présentent en l'occurrence sous la forme d'une armature, qui peut être métallique mais qui est ici réalisée dans une matière plastique (tel qu'un polypropylène) qui a notamment l'avantage de la légèreté.

Cette armature 8 présente de préférence une structure tubulaire à des fins de rigidité. A cet effet, l'armature 8 peut être réalisée par la technique connue de l'injection plastique assistée par le gaz (couramment appelée IAG ou, en Anglais, « gaz moulding »).

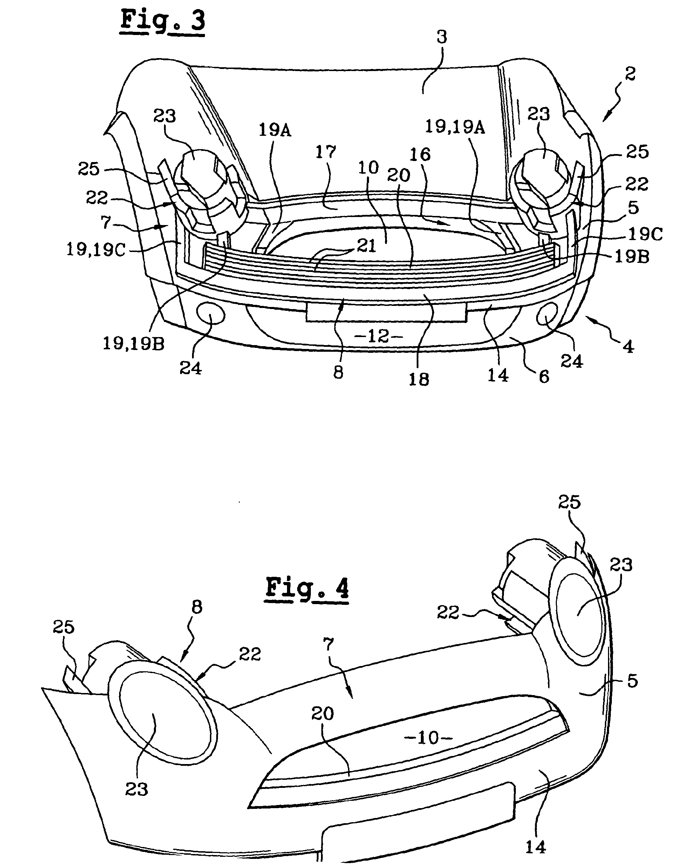

Cette armature 8 est fixée sur une face arrière 16 de la pièce d'extrémité 7 dont elle s'étend sensiblement sur toute la largeur (figure 3).

L'armature 8 comporte une traverse supérieure 17 et une traverse inférieure 18 sensiblement parallèles qui s'étendent horizontalement de part et d'autre de la prise d'air supérieure 10. Suivant le mode de réalisation illustré sur la figure 3, où la pièce d'extrémité 7 comporte une bande horizontale 14 tel que précédemment décrit, la traverse inférieure 18 s'étend derrière la bande 14 afin de rigidifier la pièce d'extrémité 7 dans cette zone.

Aux extrémités latérales de l'armature 8, les traverses 17, 18 sont reliées par des montants 19 sensiblement verticaux qui s'étendent latéralement de part et d'autre de la prise d'air supérieure 10. Comme cela est visible sur la figure 3, trois montants 19 sont prévus à chaque extrémité latérale de l'armature 8, à savoir un montant interne 19A, un montant externe 19C, ainsi qu'un montant intermédiaire 19B entre ceux-ci.

Bien que l'armature 8 ait pour fonctions principales de rigidifier la pièce d'extrémité 7 et d'assurer sa fixation au capot 3, elle peut également participer à l'absorption des chocs, au moins à faible vitesse.

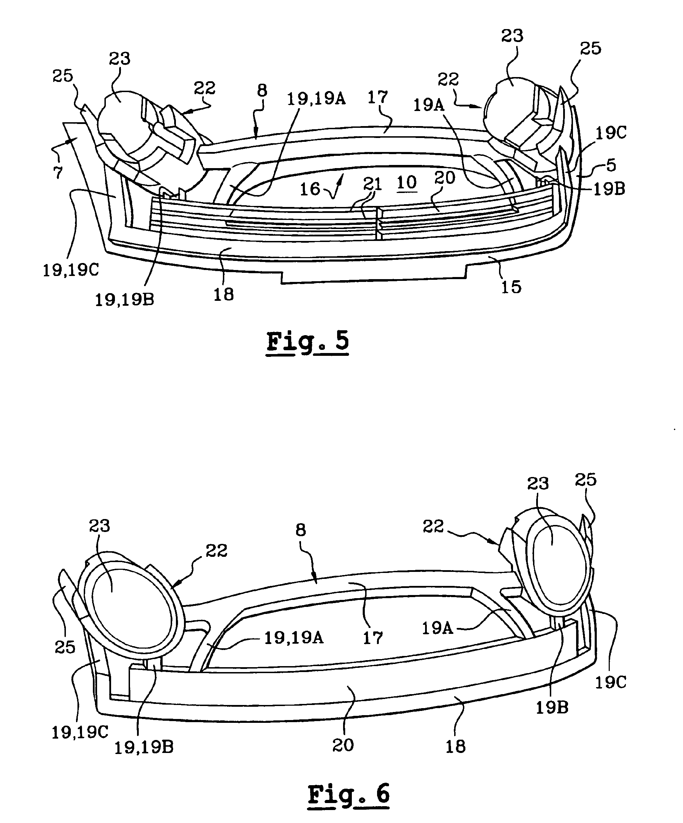

Aussi, suivant un mode de réalisation illustré sur les figures 2 à 6, l'armature comporte-t-elle un absorbeur 20 qui s'étend au-dessus et le long de la traverse inférieure 18 dont il épouse la courbure.

Afin d'absorber efficacement les chocs, l'absorbeur 20 s'étend sur une hauteur substantielle derrière la pièce d'extrémité 7. En fait, l'absorbeur 20 empiète même sur la prise d'air supérieure 10, comme cela est visible sur les figures 1 et 4. Cet absorbeur 20 est par exemple formée dans une matière plastique tel qu'une mousse de polypropylène, et il est ici renforcé par des nervures 21.

Par ailleurs, l'armature comporte deux réceptacles 22 dans chacun desquels est logé au moins l'un 23 des éléments des optiques avant du véhicule 1. Il s'agit ici d'un projecteur principal 23, tandis que des feux complémentaires 24 tels que des antibrouillard peuvent être intégrés au spoiler 6, comme cela est représenté sur les figures 2 et 3.

Les réceptacles 22, qui sont ici formés à la jonction entre la traverse supérieure 17 et les montants intermédiaires 19B et externes 19C, se prolongent vers l'arrière et vers le haut par des pattes 25 destinées à assurer la fixation de l'armature 8 au capot 3. Cette fixation peut être réalisée par tout moyen approprié, tel que collage, vissage, rivetage, ou encore encliquetage.

L'armature 8 forme donc un support pour les projecteurs 23, qui sont ainsi intégrés à la pièce d'extrémité 7. Les projecteurs 23 accompagnent ainsi le capot 3 lors de son ouverture, ce qui facilite l'accès aux projecteurs 23, notamment pour les interventions de routine tel que le remplacement d'une ampoule.

Dans le mode de réalisation illustré sur les figures, les projecteurs 23 sont situés à la jonction entre le capot 3 et la pièce d'extrémité 7, essentiellement pour des raisons de style. Toutefois, pour les mêmes raisons, les projecteurs 23 pourraient tout aussi bien s'étendre complètement dans la pièce d'extrémité 7 sans en déborder.

Par ailleurs, l'on peut prévoir de monter la pièce d'extrémité 7 sur l'armature 8 avec un ou plusieurs degrés de liberté, notamment afin de régler la position de la pièce d'extrémité 7 par rapport aux autres éléments de carrosserie, et plus particulièrement par rapport au capot moteur 3.

Ainsi, la pièce d'extrémité 7 peut être percée de trous oblongs s'étendant verticalement, dans lesquels viennent se loger des vis de fixation ou des pions de l'armature 8, afin de permettre l'ajustement de la position verticale de la pièce d'extrémité 7 par rapport au capot 3, notamment en vue de minimiser visuellement la jointure entre ces deux pièces.

Le capot 3 est représenté en position ouverte sur la figure 9, sur laquelle on peut apercevoir la face avant technique 26 du véhicule 1, portée par le châssis 27 de ce dernier.

Une poutre de chocs 28 s'étend transversalement à une certaine distance devant la face avant technique 26, à laquelle elle est fixée au moyen d'absorbeurs locaux 29 disposés de part et d'autre du logement 30 dans lequel est placé le radiateur 34.

La poutre de chocs 28 est située à une hauteur telle que, en position fermée du capot 3 (figure 2), elle se trouve derrière le bouclier 5, de manière à traiter notamment les chocs à vitesse réduite.

Comme cela est représenté sur la figure 9, le spoiler 6 est également porté par la face avant technique 26, à laquelle il est fixé au moyen d'un support 31 incluant des moyens déformables 32 prévus pour absorber une partie au moins de l'énergie d'un choc subi par le véhicule 1 à hauteur du spoiler 6. Ces moyens déformables, qui se présentent en l'occurrence sous la forme d'un bloc de mousse, sont essentiellement prévus pour traiter les chocs jambe afin d'éviter que, lors d'un choc piéton, la jambe de celui-ci ne passe sous le véhicule 1.

Le spoiler 6 se trouve à une distance suffisante de la face avant technique 26, pour qu'il subsiste devant le radiateur 34 un espace vide 33 dans lequel peuvent être placés divers organes fonctionnels du véhicule, et notamment des câbles de raccordement électrique, qui sont ordinairement placés derrière le bouclier.

Comme on l'aura compris, la face avant technique 24 est structurellement dissociée du bouclier 5. Ceci permet la standardisation de la face avant technique 24, qui est habituellement différente d'un véhicule à l'autre.

Par ailleurs, le fait que les optiques, qui sont habituellement intégrés à la face avant technique, soient portés par la pièce d'extrémité 7 et de ce fait dissociés de la face avant technique, permet de simplifier cette dernière.

## Revendications

1. Pièce d'extrémité (7) pour capot moteur avant (3) d'un véhicule, réalisée en une matière plastique déformable, et comprenant des moyens (8) pour sa fixation à un capot moteur (3), dans le prolongement de celui-ci en direction de l'avant du véhicule, de manière que ladite pièce d'extrémité (7) accompagne le capot (3) lors de son ouverture.

2. Pièce d'extrémité (7) selon la revendication 1, **caractérisée en ce qu**'elle forme une partie au moins du bouclier (5) du véhicule.

3. Pièce d'extrémité (7) selon la revendication 1 ou 2, **caractérisée en ce qu'**elle intègre au moins une partie des optiques avant du véhicule.

4. Pièce d'extrémité (7) selon l'une des revendications 1 à 3, **caractérisée en ce qu**'elle comporte une armature (8) formant les moyens pour sa fixation au capot (3).

5. Pièce d'extrémité (7) selon la revendication 4, **caractérisée en ce que** l'armature (8) forme support pour une partie au moins des optiques avant du véhicule.

6. Pièce d'extrémité (7) selon la revendication 4 ou 5, **caractérisée en ce que** l'armature (8) comporte un absorbeur de chocs (20).

7. Pièce d'extrémité (7) selon l'une des revendications 1 à 6, **caractérisée en ce qu'**elle comporte une prise d'air (10) formant au moins une partie d'une calandre (11).

8. Face avant (2) de véhicule automobile, comportant un capot (3), un pare-chocs (4), ainsi qu'une pièce d'extrémité (7) selon l'une des revendications 1 à 8.

9. Face avant (2) selon la revendication 8, **caractérisée en ce que** ladite pièce d'extrémité (7) forme au moins en partie le bouclier (5) du pare-chocs (4).

10. Face avant (2) selon la revendication 9, **caractérisée en ce que** le pare-chocs (4) comporte un spoiler (6) disposé sous la pièce d'extrémité (7), et **en ce qu'**un jeu (J) de claquage est ménagé entre la pièce d'extrémité (7) et le spoiler (6).

## Claims

1. A front end part (7) for the engine hood (3) of a vehicle, the part being made of a deformable plastics material and including means (8) for fixing it to an engine hood (3) so as to extend the hood towards the front of the vehicle, in such a manner that said end part (7) accompanies the hood (3) when it is opened.

2. An end part (7) according to claim 1, **characterized in that** it forms at least a part of the shield (5) of the vehicle.

3. An end part (7) according to claim 1 or claim 2, **characterized in that** it integrates at least a portion of the front light units of the vehicle.

4. An end part (7) according to any one of claims 1 to 3, **characterized in that** it includes a strength member (8) forming the means for fixing it to the hood (3).

5. An end part (7) according to claim 4, **characterized in that** the strength member (8) forms a support for at least a portion of the front light units of the vehicle.

6. An end part (7) according to claim 4 or claim 5, **characterized in that** the strength member (8) includes an impact absorber (20).

7. An end part (7) according to any one of claims 1 to 6, **characterized in that** it includes an air intake (10) forming at least a portion of a radiator grille (11).

8. A motor vehicle front face (2) including a hood (3), a bumper (4), and an end part (7) according to any one of claims 1 to 8.

9. A front face (2) according to claim 8, **characterized in that** said end part (7) forms at least a portion of the shield (5) of the bumper (4) .

10. A front face (2) according to claim 9, **characterized in that** the bumper (4) includes a spoiler (6) disposed beneath the end part (7), and **in that** slamming clearance (J) is provided between the end part (7) and the spoiler (6).

## Patentansprüche

1. Endteil (7) für eine vordere Motorhaube (3) eines Fahrzeugs, das aus einem verformbaren Kunststoffmaterial hergestellt wird und Mittel (8) umfasst, mit denen es an einer Motorhaube (3) in deren Verlängerung in Richtung zum Vorderteil des Fahrzeugs dergestalt befestigt werden kann, dass das Endteil (7) sich beim Öffnen der Motorhaube (3) mitbewegt.

2. Endteil (7) nach Anspruch 1, **dadurch gekennzeichnet, dass** es einen Teil zumindest der Schürze (5) des Fahrzeugs bildet.

3. Endteil (7) nach Anspruch 1 oder 2, **dadurch gekennzeichnet, dass** es mindestens einen Teil der vorderen Beleuchtungsanlage des Fahrzeugs integriert.

4. Endteil (7) nach einem der Ansprüche 1 bis 3, **dadurch gekennzeichnet, dass** es einen Rahmen (8) aufweist, der die Mittel für seine Befestigung an der Motorhaube (3) ausbildet.

5. Endteil (7) nach Anspruch 4, **dadurch gekennzeichnet, dass** der Rahmen (8) eine Halterung mindestens für einen Teil der vorderen Beleuchtungsanlage des Fahrzeugs ausbildet.

6. Endteil (7) nach Anspruch 4 oder 5, **dadurch gekennzeichnet, dass** der Rahmen (8) einen Stoßfänger (20) aufweist.

7. Endteil (7) nach einem der Ansprüche 1 bis 6, **dadurch gekennzeichnet, dass** es einen Lufteinlass (10) ausbildet, der zumindest einen Teil eines Kühlergrills (11) ausbildet.

8. Vorderseite (2) des Kraftfahrzeugs, die eine Motorhaube (3), einen Stoßfänger (4) sowie ein Endteil (7) nach einem der Ansprüche 1 bis 8 aufweist.

9. Vorderseite (2) nach Anspruch 8, **dadurch gekennzeichnet, dass** das Endteil (7) zumindest teilweise die Schürze (5) des Stoßfängers ausbildet.

10. Vorderseite nach Anspruch 9, **dadurch gekennzeichnet, dass** der Stoßfänger (4) einen Spoiler (6) aufweist, der unterhalb des Endteils (7) angeordnet ist, und **dadurch**, dass zwischen dem Endteil (7) und dem Spoiler (6) ein Spalt J vorgesehen ist, durch den vermieden wird, dass beim Schließen der Motorhaube Beschädigungen auftreten.
